# EUROPÄISCHE PATENTSCHRIFT

(11) **EP 3 084 397 B1**
(45) Veröffentlichungstag und Bekanntmachung des Hinweises auf die Patenterteilung: **19.12.2018**
(21) Anmeldenummer: 14802912.7
(22) Anmeldetag: 27.11.2014
(51) Int. Cl.: G01N 21/3577, G01N 21/552, G01N 21/35

(54) **ATR-INFRAROTSPEKTROMETER**
ATR INFRARED SPECTROMETER
SPECTROMÈTRE INFRAROUGE ATR

(30) Priorität: 17.12.2013 DE 102013114244
(43) Veröffentlichungstag der Anmeldung: 26.10.2016
(73) Patentinhaber: Pyreos Ltd., EH9 3JF Edinburgh (GB); Spectrolytic GmbH, 92533 Wernberg-Köblitz (DE)
(72) Erfinder: GIEBELER, Carsten, Edinburgh EH32 0PE (GB); WIESENT, Benjamin Reinhard, 92533 Wernberg-Köblitz (DE)
(74) Vertreter: PATERIS Patentanwälte PartmbB
(86) Internationale Anmeldenummer: PCT/EP2014/075791
(87) Internationale Veröffentlichungsnummer: WO 2015/090891

(56) Entgegenhaltungen:
- WO-A2-2009/107988
- US-A- 4 975 581
- US-A1- 2001 030 288
- US-A1- 2002 079 451
- US-A1- 2009 056 434
- US-A1- 2010 265 509
- DONG SOO KIM ET AL: "Development of an ultra-compact mid-infrared attenuated total reflectance spectrophotometer", OPTICAL ENGINEERING, Bd. 53, Nr. 7, 18. Juli 2014 (2014-07-18), Seite 074108, XP055168630, ISSN: 0091-3286, DOI: 10.1117/1.OE.53.7.074108
- WIESENT BENJAMIN R ET AL: "Linear variable filter based oil condition monitoring systems for offshore windturbines", INSTRUMENTATION, METROLOGY, AND STANDARDS FOR NANOMANUFACTURING, OPTICS, AND SEMICONDUCTORS V, SPIE, 1000 20TH ST. BELLINGHAM WA 98225-6705 USA, Bd. 8105, Nr. 1, 8. September 2011 (2011-09-08), Seiten 1-10, XP060018198, DOI: 10.1117/12.891505 [gefunden am 1901-01-01]

## Beschreibung

Die Erfindung betrifft ein ATR-Infrarotspektrometer.
Ein ATR-Infrarotspektrometer ist zur Analyse der chemischen Zusammensetzung einer Probe bekannt. Das ATR-Infrarotspektrometer (ATR: Attenuated Total Reflection (englisch) heißt: abgeschwächte Totalreflexion) weist einen langgestreckten ATR-Kristall als ein Lichtwellenleiter auf, in dem Infrarotlicht in Totalreflexion geführt wird, wobei etwa zehn Mehrfachreflexionen auftreten. An den Totalreflexionen bilden sich hinter der reflektierenden Grenzfläche des ATR-Kristalls evaneszente Wellen aus, die mit einer Probe wechselwirken, die nahe der Grenzfläche etwa auf einer Probenbühne angeordnet ist. Das Material des ATR-Kristalls ist beispielsweise Zinksulfid oder Zinkselenid.

US 2001/0030288 A1 offenbart einen ATR-Infrarotspektrometer umfassend eine IR-Lichtquelle, einen ATR Kristall, eine linearen variablen Filter (LVF) und ein Detektorarray. Die IR-Quelle ist langgestreckt senkrecht zur Längsachse des Kristalls. Das Licht von der IR-Quelle fällt auf den ATR-Kristall, der zwischen dieser Quelle und dem LVF angeordnet ist. Der Kristall stellt eine Probebühne für eine z.B. flüssige Probe dar, die mittels ATR untersucht wird. Die Eingangsstirnfläche des Kristalls ist der Lichtquelle unmittelbar angeordnet und die Ausgangsfläche des Kristalls unmittelbar dem LVF angeordnet. Das Licht propagiert entlang die Länge des Kristalls von der IR-Quelle ausgehend bis zum LVF. Der LVF erzeugt ein Lichtspektrum vorzugsweise umfassend Wellenlängen im Bereich 2.5 Mikrometer bis 11 Mikrometers. Das Spektrum vom LVF trifft danach auf dem Detektorarray.

An dem einen Längsende des ATR-Kristalls ist eine Infrarotlichtquelle angeordnet, mit der das Infrarotlicht in dem ATR-Kristall einkuppelbar ist. An dem dem einen Längsende abgewandt angeordneten anderen Längsende ist ein Infrarotlichtsensor mit einem linear variablen Wellenlängenfilter angeordnet, mit dem das Spektrum des aus dem ATR-Kristall ausgekuppelten Infrarotlichts detektierbar ist. Das Zinksulfid oder das Zinkselenid für den ATR-Kristall wird für Wellenlängen des Infrarotlichts zwischen 5,5 µm und 11,0 µm verwendet, wobei der linear variable Wellenlängenfilter auf diesen Wellenlängenbereich abgestimmt ist, um mit dem Infrarotlichtsensor die entsprechende spektrale Auflösung bereitzustellen. Der Infrarotlichtsensor ist beispielsweise ein lineares Array aus einer Mehrzahl an pyroelektrischen Infrarotlichtpixel. Um eine gute Ausleuchtung des ATR-Kristalls zu erzielen, ist es bekannt, dass die Infrarotlichtquelle eine Längserstreckung hat, die mindestens so groß ist wie die Längserstreckung des linearen Infrarotlichtsensorarrays ist. Alternativ ist es bekannt mit einer kolimierenden Linse zwischen der Infrarotlichtquelle und dem ATR-Kristall das einfallende Infrarotlicht so zu bündeln, dass das lineare Infrarotlichtsensorarray gut ausgeleuchtet ist. Dadurch wird zwar erreicht, dass die spektrale Auflösung des ATR-Infrarotspektrometers hoch ist, jedoch ist nachteilig das Signal-Rausch-Verhältnis über den betreffenden Wellenlängenbereich von 5,5 µm bis 11.0 µm stark unterschiedlich.

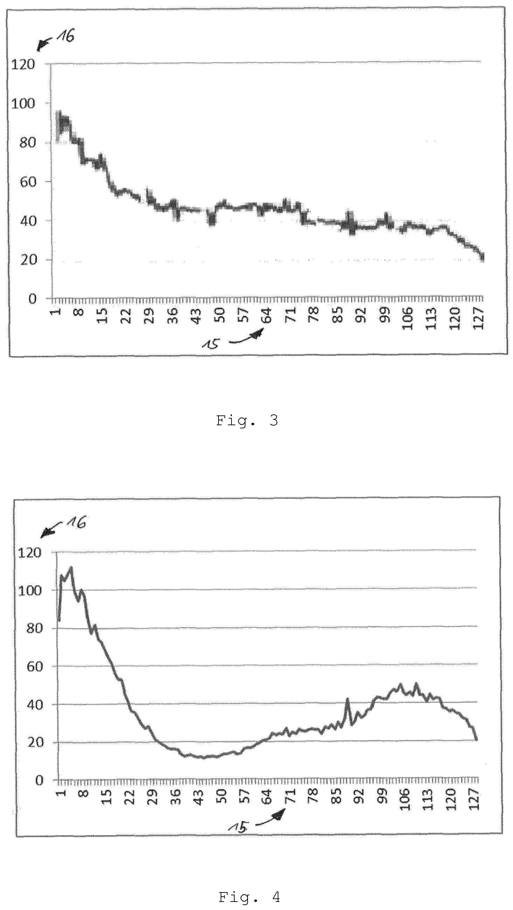

In Figur 4 ist ein Diagramm gezeigt, das den Verlauf des Signal-Rausch-Verhältnisses des ATR-Infrarotspektrometers entlang des Infrarotlichtsensorarrays zeigt. Die mit den Bezugszeichen 16 bezeichnete Ordinate gibt das Signal-Rausch-Verhältnis an, das über der Abszisse 15 aufgetragen ist, auf der die Positionen der einzelnen Infrarotlichtpixel des Infrarotlichtsensorarrays nummeriert angezeigt sind. Auf das Infrarotlichtpixel mit der Positionsnummer 1 trifft Infrarotlicht mit der Wellenlänge von 5,5 µm und auf das Infrarotlichtpixel mit der Positionsnummer 130 trifft Infrarotlicht mit der Wellenlänge von 11.0 µm. Auf die Infrarotlichtpixel mit den Positionsnummern zwischen 1 und 130 trifft Infrarotlicht mit der Wellenlänge zwischen 5,5 µm und 11.0 µm, wobei die Wellenlänge vom Infrarotlichtpixel mit der Positionsnummer 1 bis zum Infrarotlichtpixel mit der Positionsnummer 130 linear ansteigt. Wie es aus Figur 4 ersichtlich ist, ist das Signal-Rausch-Verhältnis der ersten 20 Pixel vorteilhaft hoch. Ebenfalls noch recht hoch ist das Signal-Rausch-Verhältnis bei den Infrarotlichtpixel mit der Positionsnummer zwischen 100 und 120. Besonders niedrig ist das Signal-Rausch-Verhältnis der Infrarotlichtpixel mit den Positionsnummern zwischen 25 und 60. Diese ungleiche Verteilung des Signal-Rausch-Verhältnisses über die Infrarotlichtpixel und somit über den mit dem ATR-Infrarotspektrometer gemessenen Wellenlängenbereich ist von großem Nachteil, insbesondere dann, wenn für eine hohe Genauigkeit der Analyse der chemischen Zusammensetzung der Probe ein möglichst gleichbleibendes Signal-Rausch-Verhältnis über dem gesamten Wellenlängenmessbereich erforderlich ist.

Aufgabe der Erfindung ist es ein ATR-Infrarotspektrometer zu schaffen, mit dem eine hohe Messgenauigkeit über dem gesamten Wellenlängenmessbereich erzielbar ist.
Die Aufgabe wird gelöst mit den Merkmalen des Patentanspruchs 1. Bevorzugte Ausgestaltungen dazu sind in den weiteren Patentansprüchen angegeben.
Das erfindungsgemäße ATR-Infrarotspektrometer zur Analyse der chemischen Zusammensetzung einer Probe weist die Merkmale des unabhängigen Anspruch 1 auf.

Bevorzugt ist es, dass die Längsachsen der Infrarotlichtemitterzeile und der Infrarotlichtdetektorzeile jeweils senkrecht zur Längsachse des ATR-Kristalls sind. Die Infrarotlichtemitterzeile ist bevorzugt mit ihrer Gesamterstreckung aller Infrarotlicht emittierenden Bereiche bezogen auf die Richtung senkrecht zur Längsachse des ATR-Kristalls innerhalb der Gesamterstreckung aller Infrarotlicht detektierenden Bereiche der Infrarotlichtdetektorzeile angeordnet, die mit ihrer Gesamterstreckung aller Infrarotlicht detektierenden Bereiche bezogen auf die Richtung senkrecht zur Längsachse des ATR-Kristalls innerhalb der Breitenerstreckung des ATR-Kristalls angeordnet ist. Ferner entspricht bevorzugtermaßen die Gesamterstreckung aller Infrarotlicht emittierenden Bereiche der Infrarotlichtemitterzeile zwischen 15 und 95 % der Gesamterstreckung aller Infrarotlicht detektierenden Bereiche der Infrarotlichtdetektorzeile bezogen auf die Richtung senkrecht zur Längsachse des ATR-Kristalls. Bevorzugtermaßen weist die Infrarotlichtemitterzeile in Reihe entlang der Längsachse der Infrarotlichtemitterzeile angeordnete Infrarotlichtpixel auf. Die Infrarotlichtpixel weisen bevorzugt jeweils einen der Infrarotlicht emittierenden Bereiche auf, die in Richtung senkrecht zur Längsachse des ATR-Kristalls unmittelbar aneinanderliegen. Alternativ ist es bevorzugt, dass die Infrarotlichtpixel jeweils einen der Infrarotlicht emittierenden Bereiche aufweisen, wobei die Anzahl der Infrarotlichtpixel und die Gesamterstreckung ihrer Infrarotlicht emittierenden Bereiche in Richtung senkrecht zur Längsachse des ATR-Kristalls derart aufeinander abgestimmt sind, dass die Abdeckung der Infrarotlicht emittierenden Bereiche der Infrarotlichtpixel mindestens 25 % der Gesamterstreckung aller Infrarotlicht emittierenden Bereiche der Infrarotlichtemitterzeile entspricht.
Es ist bevorzugt, dass die Infrarotlicht emittierenden Bereiche der Infrarotlichtpixel jeweils rechteckig sind. Eine der Diagonalen der Infrarotlicht emittierenden Bereiche der Infrarotlichtpixel ist bevorzugtermaßen senkrecht zur Längsachse des ATR-Kristalls. Alternativ bevorzugt ist es, dass eine der Seitenkanten der Infrarotlicht emittierenden Bereiche der Infrarotlichtpixel senkrecht zur Längsachse des ATR-Kristalls ist.

Die Infrarotlichtdetektorzeile weist einen linear variablen Wellenlängenfilter auf, dessen Lichtdurchlässigkeit senkrecht zur Längsachse des ATR-Kristalls variiert. Bevorzugt ist es, dass ATR-Kristall Zinksulfid oder Zinkselenid aufweist und der Spektralbereich des Wellenlängenfilters von 5,5 µm bis 11,0 µm ist. Das ATR-Infrarotspektrometer ist mit Infrarotlicht aller Wellenlängen betreibbar, für die der ATR-Kristall transparent ist. Der Spektralbereich des Wellenlängenfilters umfasst den Wellenlängenbereich, für den der ATR-Kristall transparent ist, oder Ausschnitte davon.

Ferner weist bevorzugtermaßen die Infrarotlichtdetektorzeile eine Mehrzahl von pyroelektrischen Infrarotlichtsensorpixel auf. Es ist bevorzugt, dass die pyroelektrischen Infrarotlichtsensorpixel zum Detektieren von Infrarotlicht eine Dünnschicht aus Bleizirkonattitanat aufweisen. Die Dünnschicht ist bevorzugtermaßen dünner als die Wellenlänge des zu detektierenden Infrarotlichts.

Dadurch, dass erfindungsgemäß die Gesamterstreckung aller Infrarotlicht detektierenden Bereiche der Infrarotlichtdetektorzeile bezogen auf die Richtung senkrecht zur Längsachse des ATR-Kristalls maximal der Breite des ATR-Kristalls entspricht und größer als die Gesamterstreckung aller Infrarotlicht emittierenden Bereiche der Infrarotlichtemitterzeile ist, ist das Signal-Rausch-Verhältnis des erfindungsgemäßen ATR-Infrarotspektrometers über den gesamten Bereich der Wellenlängen des von der Infrarotlichtdetektorzeile detektierbaren Spektrums gleichmäßig hoch. Etwa Einbrüche beim Signal-Rausch-Verhältnis des ATR-Infrarotspektrometers, wie sie aus dem Stand der Technik bekannt sind, treten erfindungsgemäß nicht auf. Das Signal-Rausch-Verhältnis des erfindungsgemäßen ATR-Infrarotspektrometers ist über seinen gesamten Wellenlängenbereich gleichmäßig hoch, so dass eine hohe Messgenauigkeit erzielt ist.

Durch die erfindungsgemäße Dimensionierung der Gesamterstreckungen aller Infrarotlicht emittierenden und detektierenden Bereiche ist der Lichtkegel des Infrarotlichts, der via die Eintrittsfläche in den ATR-Kristall eintritt derart, dass die Vergleichmäßigung des Signal-Rausch-Verhältnisses des ATR-Infrarotspektrometers bei hohem Niveau erzielt ist. Die Gesamterstreckung aller Infrarotlicht emittierenden Bereiche kann zwischen zwei 250 µm und 1000 µm liegen, wobei beispielsweise zehn der Infrarotlichtpixel für die Infrarotlichtemitterzeile vorgesehen sind. Ferner kann beispielsweise die Gesamterstreckung aller Infrarotlicht emittierenden Bereiche von 1000 µm bis 3000 µm liegen, wobei die Infrarotlichtemitterzeile zwei der Infrarotlichtpixel aufweist.

Der Erfindung liegt die Beobachtung zugrunde, dass, wenn das zu detektierende Infrarotlicht leicht schräg auf die Infrarotlichtdetektorzeile fällt, zusätzliche Interferenzeffekte in der Dünnschicht auftreten. Es wurde empirisch ermittelt, dass diese Interferenzeffekte die erfindungsgemäß erreichte Vergleichmäßigung des Signal-Rausch-Verhältnisses bewirken. Diese Interferenzeffekte sind erfindungsgemäß dadurch zu erreichen, dass die Gesamterstreckung aller Infrarotlicht detektierenden Bereiche der Infrarotlichtdetektorzeile maximal der Breite des ATR-Kristalls entspricht und größer ist als die Gesamterstreckung aller Infrarotlicht emittierenden Bereiche der Infrarotlichtemitterzeile. Bei einem ATR-Infrarotspektrometer, bei dem die erfindungsgemäße Dimensionierung der Infrarotlicht emittierenden und detektierenden Bereiche nicht vorgesehen ist, treten die Interferenzeffekte in der Dünnschicht nicht auf, so dass dieses ATR-Infrarotspektrometer eine stark ungleiche Verteilung des Signal-Rausch-Verhältnises über die Wellenlänge hat.

Im Folgenden werden bevorzugte Ausführungsformen des erfindungsgemäßen ATR-Infrarotspektrometers anhand der beigefügten schematischen Zeichnungen erläutert. Es zeigen:
Figur 1 eine Draufsicht der ersten erfindungsgemäßen Ausführungsform,
Figur 2 eine Draufsicht der zweiten erfindungsgemäßen Ausführungsform,
Figur 3 ein Diagramm über den Verlauf des Signal-Rausch-Verhältnisses über das Wellenlängenspektrum des erfindungsgemäßen ATR-Infrarotspektrometers und
Figur 4 ein Diagramm über den Verlauf des Signal-Rausch-Verhältnisses eines herkömmlichen ATR-Infrarotspektrometers.

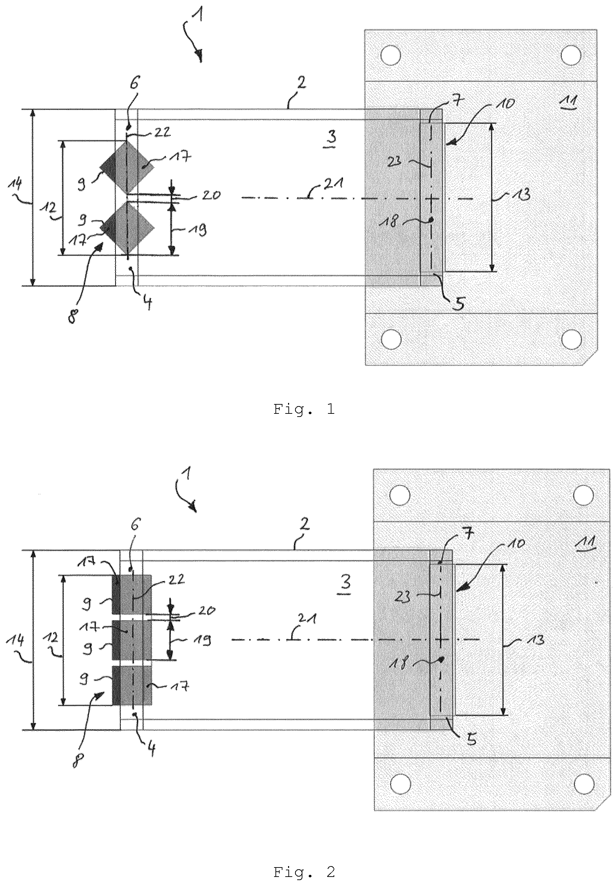

Wie es aus Figuren 1 und 2 ersichtlich ist, weist ein erfindungsgemäßes ATR-Infrarotspektrometer 1 einen langgestreckten ATR-Kristall 2 auf, der eine Längsachse 21 hat. In der Draufsicht hat der ATR-Kristall 2 eine rechteckige Grundfläche, wobei eine der beiden, insbesondere die obere, rechteckige Oberfläche eine Probenbühne 3 ist. Auf der Probenbühne 3 ist eine Probe anzuordnen, deren chemische Zusammensetzung mit dem ATR-Infrarotspektrometer 1 analysiert werden kann. An einer der Stirnseiten des ATR-Kristalls ist eine erste Eintrittsfläche 4 und an der der einen Stirnseite abgewandt angeordneten anderen Stirnseite ist eine Austrittsfläche 5 des ATR-Kristalls 2 vorgesehen, wobei durch die Eintrittsfläche 4 Infrarotlicht in den ATR-Kristall 2 eintritt und Infrarotlicht aus der Austrittsfläche 5 aus dem ATR-Kristall 2 austritt. Zur Eintrittsfläche 4 benachbart ist am ATR-Kristall 2 eine erste Reflexionsfläche 6 und an der Austrittsfläche 5 eine zweite Reflexionsfläche 7 vorgesehen, wobei die Reflexionsflächen 6, 7 so angeordnet sind, dass Infrarotlicht, das via die Eintrittsfläche 4 in den ATR-Kristall 2 eintritt, im ATR-Kristall 2 mehrfach totalreflektiert wird und dann via die Austrittsfläche 5 aus dem ATR-Kristall 2 austritt. Die Eintrittsfläche 4 und die Austrittsfläche 5 sind parallel zur Probenbühne 3 angeordnet, wohingegen die Reflexionsflächen 6, 7 zur Probenfläche 3 geneigt angeordnet sind.

Unmittelbar benachbart zur Eintrittsfläche 4 ist eine Infrarotlichtemitterzeile 8 angeordnet, die vom Infrarotlichtpixel 9 gebildet ist. Die in Figur 1 gezeigte Ausführungsform weist zwei Infrarotlichtpixel 9 und die in Figur 2 gezeigte Ausführungsform weist drei Infrarotlichtpixel 9 auf. Die Infrarotlichtpixel sind eingerichtet Infrarotlicht zu emittieren, dessen Wellenlängenbereich den Bereich zwischen 5,5 µm bis 11,0 µm aufweist. Der ATR-Kristall 2 ist aus Zinksulfid oder Zinkselenid. Das von dem Infrarotlichtpixel 9 emittierte Infrarotlicht wird via die Eintrittsfläche 5 in den ATR-Kristall 2 eingekuppelt, an der ersten Reflexionsfläche 6 totalreflektiert und dann in dem ATR-Kristall 2 durch eine Mehrzahl an Totalreflexionen an der Probenbühne 3 und der der Probenbühne 3 abgewandt angeordneten Oberfläche des ATR-Kristalls 2 zur zweiten Reflexionsfläche 7 geführt, an der das Infrarotlicht zur Austrittsfläche 5 hin reflektiert wird und dort aus dem ATR-Kristall 2 ausgekoppelt wird. Das von den Infrarotlichtpixel 9 emittierte Infrarotlicht trifft unmittelbar auf die Eintrittsfläche 4, da an den Infrarotlichtpixel 9 weder etwa ein Hohlspiegel noch eine Kollimatorlinse zur Fokussierung des Infrarotlichts vorgesehen ist. Die Infrarotlichtemitterzeile 8 hat eine Längsachse 22, die senkrecht zur Längsachse 21 des ATR-Kristalls 2 verläuft.

Der Infrarotlichtemitterzeile 8 abgewandt und unmittelbar an der Austrittsfläche 5 unmittelbar angeordnet ist am ATR-Kristall 2 eine Infrarotlichtdetektorzeile 10 vorgesehen. Die Infrarotlichtdetektorzeile 10 hat eine Längsachse 23, die parallel zur Längsachse 22 der Infrarotlichtemitterzeile 8 und senkrecht zur Längsachse 21 des ATR-Kristalls 2 ist. Die Infrarotlichtdetektorzeile 10 ist von einer Mehrzahl von pyroelektrischen Infrarotlichtsensorpixel gebildet, die jeweils eine Dünnschicht aus Bleizirkonattitanat aufweisen. Zwischen der Infrarotlichtdetektorzeile 10 und der Austrittsfläche 5 ist ein linear variabler Wellenlängenfilter angeordnet, dessen Spektralbereich von 5,5 µm bis 11,0 µm ist. Somit trifft auf das eine Infrarotlichtsensorpixel, das unmittelbar benachbart zum einen Ende des linear variablen Wellenlängenfilters angeordnet ist, dessen Lichtdurchgang bei 5,5 µm liegt, lediglich Infrarotlicht mit gerade dieser Wellenlänge. Analog trifft auf das hierzu abgewandt angeordnete Infrarotlichtsensorpixel lediglich Infrarotlicht mit der Wellenlänge von 11,0 µm. Zwischen diesen beiden äußeren Infrarotlichtsensorpixel trifft Infrarotlicht mit einer Wellenlänge zwischen 5,5 µm und 11,0 µm, wobei der Spektrumsverlauf des Wellenlängenfilters linear ist. Die Infrarotlichtdetektorzeile 10 weist 130 Infrarotlichtsensorpixel auf, wobei das eine äußere Infrarotlichtpixel mit der Positionsnummer 1 an dem Ende des Wellenlängenfilters liegt, an dem Infrarotlicht von 5,5 µm passiert, und das andere äußere Infrarotsensorpixel mit der Nummer 130 am anderen des Wellenlängenfilters liegt, an dem Infrarotlicht mit der Wellenlänge von 11,0 µm passiert.

An der Infrarotlichtdetektorzeile 10 ist eine Auswerteplattform 11 des ATR-Infrarotspektrometers 2 vorgesehen, mit der zur Spektralanalyse einer Probe, die auf der Probenbühne 3 angeordnet ist, mit einer entsprechenden Elektronik auswertbar ist.

Die Dünnschichten der Infrarotsensorpixel aus dem Bleizirkonattitanat sind dünner als die Wellenlänge desjenigen Infrarotlichts, das auf sie trifft, das heißt vom linear variablen Wellenlängenfilter zu ihnen durchgelassen wurde. Bei den gezeigten Ausführungsformen ist die Dicke der Dünnschichten aus dem Bleizirkonattitanat kleiner als die kleinste Wellenlänge desjenigen Infrarotlichts gewählt, das den Wellenlängenfilter passiert. Das heißt, bei den gezeigten Ausführungsformen sind die Dünnschichten der Infrarotlichtsensorpixel dünner als 5,5 µm ausgeführt.

Gemäß den in Figuren 1 und 2 gezeigten Ausführungsformen haben die Infrarotlichtpixel 9 jeweils eine rechteckige Emissionsfläche 17, wobei die Emissionsflächen 17 der Infrarotlichtpixel 9 gleich groß ausgebildet sind. Die Infrarotlichtpixel 9 sind entlang der Längsachse 22 der Infrarotlichtemitterzeile 8 angeordnet, wobei die Mittelpunkte der rechteckigen Emissionsflächen auf der Längsachse 22 der Infrarotlichtemitterzeile 8 liegen.

Die in Figur 1 gezeigte Ausführungsform weist die zwei Infrarotlichtpixel 9 auf, wobei jeweils eine Diagonale der Emissionsflächen 17 der Infrarotlichtpixel 9 auf der Längsachse 22 der Infrarotlichtemitterzeile 8 liegt. Dadurch wird von der Länge der Diagonale die Breite 19 der Infrarotlichtemission der Emissionsfläche 17 für jedes Infrarotlichtpixel 9 definiert. Bei der in Figur 2 gezeigten Ausführungsform kreuzen die Diagonalen der Emissionsflächen 17 der drei Infrarotlichtpixel 9 die Längsachse 22 der Infrarotlichtemitterzeile 8 im Winkel von 45°, so dass die Breiten 19 der Infrarotlichtemission der Emissionsflächen 17 jeweils durch die Seitenlänge der Emissionsflächen 19 definiert ist. Zwischen den Infrarotlichtpixel 9 sind bei der Ausführungsform in Figur 1 und bei der Ausführung in Figur 2 jeweils ein Abstand 20 vorgesehen. Die Gesamtlänge 12 der Infrarotlichtemission der Emissionsflächen 17 der Infrarotlichtpixel 9 der Infrarotlichtemitterzeile 8 ist von den beiden Extremerstreckungen der Infrarotlichtpixel 9 der Infrarotlichtemitterzeile 8 definiert, wobei innerhalb der Gesamtlänge 12 der Infrarotlichtemission der Abstand 20 der Infrarotlichtpixel 9 gemäß Figur 1 und die Abstände 20 der Infrarotlichtpixel 9 gemäß Figur 2 angeordnet sind.

Die Infrarotlichtdetektorzeile 10 hat eine Detektionsfläche 18, die entlang der Längsachse 23 der Infrarotlichtdetektorzeile 10 sich erstreckt und entlang der die Infrarotsensorpixel zum Detektieren von Infrarotlicht angeordnet sind. Die Erstreckung der Emissionsfläche 17 entlang der Längsachse 23 der Infrarotlichtdetektionszeile 10 ergibt die Gesamtlänge 13 der Infrarotlichtdetektion, wobei die Gesamtlänge der Infrarotlichtemission 12 kleiner ist als die Gesamtlänge 13 der Infrarotlichtdetektion. Ferner überdeckt der ATR-Kristall 2 mit seiner Breite 14 die Gesamtlänge 13 der Infrarotlichtdetektion und somit die Gesamtlänge 12 der Infrarotlichtemission. Die Reihe an den Emissionsflächen 17 und die Reihe an den Detektionsflächen 18 sind jeweils symmetrisch zur Längsachse 21 des ATR-Kristalls 2 angeordnet.

Die Seitenlängen der Emissionsflächen 17 gemäß den Ausführungsformen in Figuren 1 und 2 betragen 2 mm, wobei der Abstand 20 zwischen den Infrarotlichtpixel 9 bei der Ausführungsform gemäß Figur 1 11,03 mm und die Abstände 20 bei der Ausführungsform gemäß Figur 2 12,30 mm betragen.

In Figur 3 und 4 sind jeweils Diagramme gezeigt, die das Signal-Rausch-Verhältnis 16 entlang der Infrarotlichtdetektorzeile 10 zeigen, wobei an der Abszisse 15 die Positionen der Infrarotlichtsensorpixel in der Infrarotlichtdetektorzeile 10 mit Positionsnummern von 1 bis 130 angegeben sind. Auf das Infrarotlichtsensorpixel mit der Nummer 1 trifft Infrarotlicht mit der Wellenlänge von 5,5 µm und auf das Infrarotlichtpixel mit der Positionsnummer 130 trifft Infrarotlicht mit der Wellenlänge von 11,0 µm. Auf die Infrarotlichtsensorpixel, die zwischen dem Infrarotlichtsensorpixel mit der Positionsnummer 1 und dem Infrarotlichtsensorpixel mit der Positionsnummer 127 liegen, trifft Infrarotlicht, dessen Wellenlänge zwischen 5,5 µm und 11,0 µm liegt, wobei die Wellenlänge von Infrarotlichtsensorpixel mit der Positionsnummer 1 zum Infrarotlichtsensorpixel mit der Positionsnummer 127 linear zunimmt.

Im Diagramm gemäß Figur 3 ist der Verlauf des Signal-Rausch-Verhältnisses 16 der Ausführungsformen gemäß Figuren 1 und 2 aufgetragen. Es ist ersichtlich, dass das Signal-Rausch-Verhältnis bei denjenigen Infrarotlichtsensorpixel mit den niedrigsten Positionsnummern am höchsten und bei Infrarotlichtsensorpixel mit den höchsten Positionsnummern am niedrigsten ist. Dieser Abfall ist monoton und vergleichsweise gleichmäßig.

Das in Figur 4 dargestellte Diagramm zeigt den Verlauf des Signal-Rausch-Verhältnisses 16 entlang einer Infrarotlichtdetektorzeile eines ATR-Infrarotspektrometers, bei dem eine Infrarotlichtemitterzeile einen Infrarotlichtemissionsbereich hat, dessen Gesamtlänge größer ist als die Gesamtlänge des Infrarotdetektionsbereichs der Infrarotlichtdetektorzeile. Es ist zu erkennen, dass der Verlauf der Signal-Rausch-Verhältnisses 16 in den beiden Randbereichen vergleichbar zum in Figur 3 dargestellten Diagramm ist, jedoch ist ein erheblicher Einbruch des Signal-Rausch-Verhältnisses bei Infrarotlichtsensorpixel mit einer Positionsnummer zwischen 20 und 60 zu erkennen. In diesem Bereich ist das Signal-Rausch-Verhältnis sogar niedriger als bei denjenigen Infrarotlichtsensorpixel mit den höchsten Positionsnummern. Dieser nicht monotone Verlauf des Signal-Rausch-Verhältnisses 16 und der beträchtliche Einbruch des Signal-Rausch-Verhältnisses bei Infrarotlichtpixel mit mittlerer Positionsnummer führt zu einer erheblichen Messungenauigkeit dieses bekannten ATR-Infrarotspektrometers. Hingegen ist, wie es in Figur 3 gezeigt ist, der Verlauf des Signal-Rausch-Verhältnisses 16 entlang der Infrarotlichtdetektionszeile 10 monoton und gleichmäßig, wodurch das erfindungsgemäße ATR-Infrarotspektrometer 1 eine hohe Messgenauigkeit hat.

### Bezugszeichenliste

- 1: ATR-Infrarotspektrometer
- 2: ATR-Kristall
- 3: Probenbühne
- 4: Eintrittsfläche
- 5: Austrittsfläche
- 6: erste Reflektionsfläche
- 7: zweite Reflektionsfläche
- 8: Infrarotlichtemitterzeile
- 9: Infratotlichtpixel
- 10: Infrarotlichtdetektorzeile
- 11: Auswerteplatform
- 12: Gesamtlänge der Infrarotlichtemission
- 13: Gesamtlänge der Infrarotlichtdetektion
- 14: Breite des ATR-Kristalls
- 15: Abszisse: Positionszahlen der Infrarotlichtsensorpixel der Infrarotlichtdetektorzeile
- 16: Ordinate: Signalrauschverhältnis
- 17: Emissionsfläche
- 18: Detektionsfläche
- 19: Breite der Infrarotlichtemission der Emissionsfläche
- 20: Abstand der Infrarotlichtpixel
- 21: Längsachse des ATR-Kristalls
- 22: Längsachse der Infrarotlichtemitterzeile
- 23: Längsachse der Infrarotlichtdetektorzeile

## Patentansprüche

1. ATR-Infrarotspektrometer (1) zur Analyse der chemischen Zusammensetzung einer Probe, mit einem langgestreckten ATR-Kristall (2) und einer unmittelbar an einer am einen Längsende des ATR-Kristalls (2) angeordneten Eintrittsfläche (4) des ATR-Kristalls (2) angeordneten Infrarotlichtemitterzeile (8) sowie einer am anderen Längsende des ATR-Kristalls (2) angeordneten Infrarotlichtdetektorzeile (10), wobei Infrarotlicht, das von der Infrarotlichtemitterzeile (8) emittiert ist, unmittelbar in den ATR-Kristall (2) via die Eintrittsfläche (4) eintritt und in dem ATR-Kristall (2) zur Infrarotlichtdetektorzeile (10) unter Totalreflektion und in Wechselwirkung mit der Probe, die zwischen der Infrarotlichtemitterzeile (8) und der Infrarotlichtdetektorzeile (10) benachbart zum ATR-Kristall (2) angeordnet ist, geführt ist, wobei die Gesamterstreckung (13) aller Infrarotlicht detektierenden Bereiche (18) der Infrarotlichtdetektorzeile (10) bezogen auf die Richtung senkrecht zur Längsachse (21) des ATR-Kristalls (2) maximal der Breite (14) des ATR-Kristalls (2) entspricht und größer ist als die Gesamterstreckung (12) aller Infrarotlicht emittierenden Bereiche (17) der Infrarotlichtemitterzeile (8), wobei die Infrarotlichtdetektorzeile (10) einen linear variablen Wellenlängenfilter aufweist, dessen Lichtdurchlässigkeit senkrecht zur Längsachse des ATR-Kristalls (2) variiert.

2. ATR-Infrarotspektrometer gemäß Anspruch 1, wobei die Längsachsen (22, 23) der Infrarotlichtemitterzeile (8) und der Infrarotlichtdetektorzeile (10) jeweils senkrecht zur Längsachse (21) des ATR-Kristalls (2) sind.

3. ATR-Infrarotspektrometer gemäß Anspruch 1 oder Anspruch 2, wobei die Infrarotlichtemitterzeile (8) mit ihrer Gesamterstreckung (12) aller Infrarotlicht emittierenden Bereiche (17) bezogen auf die Richtung senkrecht zur Längsachse (21) des ATR-Kristalls (2) innerhalb der Gesamterstreckung (13) aller Infrarotlicht detektierenden Bereiche (18) der Infrarotlichtdetektorzeile (10) angeordnet ist, die mit ihrer Gesamterstreckung (13) aller Infrarotlicht detektierenden Bereiche (18) bezogen auf die Richtung senkrecht zur Längsachse (21) des ATR-Kristalls (2) innerhalb der Breitenerstreckung (14) des ATR-Kristalls (2) angeordnet ist.

4. ATR-Infrarotspektrometer gemäß einem der Ansprüche 1 bis 3, wobei die Gesamterstreckung (12) aller Infrarotlicht emittierenden Bereiche (17) der Infrarotlichtemitterzeile (8) zwischen 15% und 95% der Gesamterstreckung (13) aller Infrarotlicht detektierenden Bereiche (18) der Infrarotlichtdetektorzeile (10) bezogen auf die Richtung senkrecht zur Längsachse (21) des ATR-Kristalls (2) entspricht.

5. ATR-Infrarotspektrometer gemäß einem der Ansprüche 1 bis 4, wobei die Infrarotlichtemitterzeile (8) in Reihe entlang der Längsachse (22) der Infrarotlichtemitterzeile (8) angeordnete Infrarotlichtpixel (9) aufweist.

6. ATR-Infrarotspektrometer gemäß Anspruch 5, wobei die Infrarotlichtpixel (9) jeweils einen der Infrarotlicht emittierenden Bereiche (17) aufweisen, die in Richtung senkrecht zur Längsachse (21) des ATR-Kristalls (2) unmittelbar aneinanderliegen.

7. ATR-Infrarotspektrometer gemäß Anspruch 5, wobei die Infrarotlichtpixel (9) jeweils einen der Infrarotlicht emittierenden Bereiche (17) aufweisen, wobei die Anzahl der Infrarotlichtpixel (9) und die Gesamterstreckung (12) ihrer Infrarotlicht emittierenden Bereiche (17) in Richtung senkrecht zur Längsachse (21) des ART-Kristalls (2) derart aufeinander abgestimmt sind, dass die Abdeckung der Infrarotlicht emittierenden Bereiche (17) der Infrarotlichtpixel (9) mindestens 25% der Gesamterstreckung (12) aller Infrarotlicht emittierenden Bereiche (17) der Infrarotlichtemitterzeile (8) entspricht.

8. ATR-Infrarotspektrometer gemäß einem der Ansprüche 5 bis 7, wobei die Infrarotlicht emittierenden Bereiche (17) der Infrarotlichtpixel (9) jeweils rechteckig sind.

9. ATR-Infrarotspektrometer gemäß Anspruch 8, wobei eine der Diagonalen der Infrarotlicht emittierenden Bereiche (17) der Infrarotlichtpixel (9) senkrecht zur Längsachse (21) des ATR-Kristalls (2) ist.

10. ATR-Infrarotspektrometer gemäß Anspruch 8, wobei eine der Seitenkanten der Infrarotlicht emittierenden Bereiche (17) der Infrarotlichtpixel (9) senkrecht zur Längsachse (21) des ATR-Kristalls (2) ist.

11. ATR-Infrarotspektrometer gemäß einem der Ansprüche 1 bis 10, wobei der ATR-Kristall (2) Zinksulfid oder Zinkselenid aufweist und der Spektralbereich des Wellenlängenfilters von 5,5 µm bis 11,0 µm ist.

12. ATR-Infrarotspektrometer gemäß einem der Ansprüche 1 bis 11, wobei die Infrarotlichtdetektorzeile (10) eine Mehrzahl von pyroelektrischen Infrarotlichtsensorpixel aufweist.

13. ATR-Infrarotspektrometer gemäß Anspruch 12, wobei die pyroelektrischen Infrarotlichtsensorpixel zum Detektieren von Infrarotlicht eine Dünnschicht aus Bleizirkonattitanat aufweisen.

14. ATR-Infrarotspektrometer gemäß Anspruch 13, wobei die Dünnschicht dünner ist als die Wellenlänge des zu detektierenden Infrarotlichts.

## Claims

1. ATR infrared spectrometer (1) for the analysis of the chemical composition of a sample, wherein the ATR infrared spectrometer (1) comprises an elongate ATR crystal (2) and an infrared light emitter line (8) arranged directly adjacent to an entrance face (4) of the ATR crystal (2), wherein the entrance face (4) is arranged at one longitudinal end of the ATR crystal (2), as well as an infrared light detector line (10) arranged at the other longitudinal end of the ATR crystal (2), wherein infrared light that is emitted by the infrared light emitter line (8) directly enters into the ATR crystal (2) via the entrance face (4) and is guided in the ATR crystal (2) to the infrared light detector line (10) under total internal reflection and with interaction with the sample that is arranged adjacent to the ATR crystal (2) between the infrared light emitter line (8) and the infrared light detector line (10), wherein the overall extent (13) of all infrared-light-detecting regions (18) of the infrared light detector line (10) corresponds at most to the width (14) of the ATR crystal (2) in relation to the direction perpendicular to the longitudinal axis (21) of the ATR crystal (2) and is greater than the overall extent (12) of all infrared-light-emitting regions (17) of the infrared light emitter line (8), wherein the infrared light detector line (10) comprises a linear variable wavelength filter, the light transmissivity of which varies perpendicular to the longitudinal axis of the ATR crystal (2).

2. ATR infrared spectrometer according to claim 1, wherein the longitudinal axes (22, 23) of the infrared light emitter line (8) and of the infrared light detector line (10) are each perpendicular to the longitudinal axis (21) of the ATR crystal (2).

3. ATR infrared spectrometer according to claim 1 or claim 2, wherein, in relation to the direction perpendicular to the longitudinal axis (21) of the ATR crystal (2), the infrared light emitter line (8), with its overall extent (12) of all infrared-light-emitting regions (17), is arranged within the overall extent (13) of all infrared-light-detecting regions (18) of the infrared light detector line (10) that is arranged withs its overall extent (13) of all infrared-light-detecting regions (18) of the infrared light detector line, in relation to the direction perpendicular to the longitudinal axis (21) of the ATR crystal (2), within the extent of the width (14) of the ATR crystal (2).

4. ATR infrared spectrometer according to any one of claims 1 to 3, wherein, in relation to the direction perpendicular to the longitudinal axis (21) of the ATR crystal (2), the overall extent (12) of all infrared-light-emitting regions (17) of the infrared light emitter line (8) corresponds to between 15% and 95% of the overall extent (13) of all infrared-light-detecting regions (18) of the infrared light detector line (10).

5. ATR infrared spectrometer according to any one of claims 1 to 4, wherein the infrared light emitter line (8) has infrared light pixels (9) arranged in a row along the longitudinal axis (22) of the infrared light emitter line (8).

6. ATR infrared spectrometer according to claim 5, wherein the infrared light pixels (9) each have one of the infrared-light-emitting regions (17) which are directly adjacent to one another in the direction perpendicular to the longitudinal axis (21) of the ATR crystal (2).

7. ATR infrared spectrometer according to claim 5, wherein the infrared light pixels (9) each have one of the infrared-light-emitting regions (17), wherein the number of infrared light pixels (9) and the overall extent (12) of their infrared-light-emitting regions (17) are matched to one another in the direction perpendicular to the longitudinal axis (21) of the ATR crystal (2) in such a way that the coverage of the infrared-light-emitting regions (17) of the infrared light pixels (9) corresponds to at least 25% of the overall extent (12) of all infrared-light-emitting regions (17) of the infrared light emitter line (8).

8. ATR infrared spectrometer according to any one of claims 5 to 7, wherein the infrared-light-emitting regions (17) of the infrared light pixels (9) are respectively rectangular.

9. ATR infrared spectrometer according to claim 8, wherein one of the diagonals of the infrared-light-emitting regions (17) of the infrared light pixels (9) is perpendicular to the longitudinal axis (21) of the ATR crystal (2).

10. ATR infrared spectrometer according to claim 8, wherein one of the side edges of the infrared-light-emitting regions (17) of the infrared light pixels (9) is perpendicular to the longitudinal axis (21) of the ATR crystal (2).

11. ATR infrared spectrometer according to any one of claims 1 to 10, wherein the ATR crystal (2) has zinc sulfide or zinc selenide and the spectral range of the wavelength filter is from 5.5 µm to 11.0 µm.

12. ATR infrared spectrometer according to any one of claims 1 to 11, wherein the infrared light detector line (10) has a plurality of pyroelectric infrared light sensor pixels.

13. ATR infrared spectrometer according to claim 12, wherein the pyroelectric infrared light sensor pixels have a thin film of lead zirconate titanate for detecting infrared light.

14. ATR infrared spectrometer according to claim 13, wherein the thin film is thinner than the wavelength of the infrared light to be detected.

## Revendications

1. Spectromètre infrarouge ATR (1) pour analyser la composition chimique d'un échantillon, comportant un cristal ATR allongé (2) et une rangée d'émetteurs de lumière infrarouge (8) agencée directement sur une face d'entrée (4) du cristal ATR (2) agencée sur une extrémité longitudinale du cristal ATR (2), ainsi qu'une rangée de détecteurs de lumière infrarouge (10) agencée sur l'autre extrémité longitudinale du cristal ATR (2), dans lequel de la lumière infrarouge émise par la rangée d'émetteurs de lumière infrarouge (8) pénètre directement dans le cristal ATR (2) via la face d'entrée (4) et est guidée dans le cristal ATR (2) jusqu'à la rangée de détecteurs de lumière infrarouge (10) soumise à une réflexion totale et en interaction avec la sonde qui est agencée entre la rangée d'émetteurs de lumière infrarouge (8) et la rangée de détecteurs de lumière infrarouge (10) de manière adjacente au cristal ATR (2), dans lequel l'étendue totale (13) de toutes les zones (18) détectant de la lumière infrarouge de la rangée de détecteurs de lumière infrarouge (10) par rapport à la direction perpendiculaire à l'axe longitudinal (21) du cristal ATR (2) correspond au maximum à la largeur (14) du cristal ATR (2) et est supérieure à l'étendue totale (12) de toutes les zones (17) émettant de la lumière infrarouge de la rangée d'émetteurs de lumière infrarouge (8), dans lequel la rangée de détecteurs de lumière infrarouge (10) comporte un filtre de longueur d'onde linéairement variable dont la perméabilité à la lumière varie perpendiculairement à l'axe longitudinal du cristal ATR (2).

2. Spectromètre infrarouge ATR selon la revendication 1, dans lequel les axes longitudinaux (22, 23) de la rangée d'émetteurs de lumière infrarouge (8) et de la rangée de détecteurs de lumière rouge (10) sont respectivement perpendiculaires à l'axe longitudinal (21) du cristal ATR (2).

3. Spectromètre infrarouge ATR selon la revendication 1 ou la revendication 2, dans lequel la rangée d'émetteurs de lumière infrarouge (8) avec son étendue totale (12) de toutes les zones (17) émettant de la lumière infrarouge par rapport à la direction perpendiculaire à l'axe longitudinal (21) du cristal ATR est agencée dans l'étendue totale (13) de toutes les zones (18) détectant de la lumière infrarouge de la rangée de détecteurs de lumière infrarouge (10), laquelle rangée de détecteurs de lumière infrarouge avec son étendue totale (13) de toutes les zones (18) détectant de la lumière infrarouge par rapport à la direction perpendiculaire à l'axe longitudinal (21) du cristal ATR (2) étant agencée à l'intérieur de l'extension en largeur (14) du cristal ATR (2).

4. Spectromètre infrarouge ATR selon l'une des revendications 1 à 3, dans lequel l'étendue totale (12) de toutes les zones (17) émettant de la lumière infrarouge de la rangée d'émetteurs de lumière infrarouge (8) correspond à entre 15 % et 95 % de l'étendue totale (13) de toutes les zones (18) détectant de la lumière infrarouge de la rangée de détecteurs de lumière infrarouge (10) par rapport à la direction perpendiculaire à l'axe longitudinal (21) du cristal ATR (2).

5. Spectromètre infrarouge ATR selon l'une des revendications 1 à 4, dans lequel la rangée d'émetteurs de lumière infrarouge (8) comporte des pixels de lumière infrarouge (9) agencés en série long de l'axe longitudinal (22) de la rangée d'émetteurs de lumière infrarouge (8).

6. Spectromètre infrarouge ATR selon la revendication 5, dans lequel les pixels de lumière infrarouge (9) comportent respectivement l'une des zones (17) émettant de la lumière infrarouge, lesquelles zones sont directement accolées les unes aux autres dans une direction perpendiculaire à l'axe longitudinal (21) du cristal ATR (2).

7. Spectromètre infrarouge ATR selon la revendication 5, dans lequel les pixels de lumière infrarouge (9) comportent respectivement l'une des zones (17) émettant de la lumière infrarouge, dans lequel le nombre des pixels de lumière infrarouge (9) et l'étendue totale (12) de leurs zones (17) émettant de la lumière infrarouge dans une direction perpendiculaire à l'axe longitudinal (21) du cristal ATR (2) sont adaptés l'un à l'autre de telle sorte que la couverture des zones (17) émettant de la lumière infrarouge des pixels de lumière infrarouge (9) correspond au moins à 25 % de l'étendue totale (12) de toutes les zones (17) émettant de la lumière infrarouge de la rangée d'émetteurs de lumière rouge (8).

8. Spectromètre infrarouge ATR selon l'une des revendications 5 à 7, dans lequel les zones (17) émettant de la lumière infrarouge des pixels de lumière infrarouge (9) sont respectivement rectangulaires.

9. Spectromètre infrarouge ATR selon la revendication 8, dans lequel l'une des diagonales des zones (17) émettant de la lumière infrarouge des pixels de lumière infrarouge (9) est perpendiculaire à l'axe longitudinal (21) du cristal ATR (2).

10. Spectromètre infrarouge ATR selon la revendication 8, dans lequel l'un des bords latéraux des zones (17) émettant de la lumière infrarouge des pixels de lumière infrarouge (9) est perpendiculaire à l'axe longitudinal (21) du cristal ATR (2).

11. Spectromètre infrarouge ATR selon l'une des revendications 1 à 10, dans lequel le cristal ATR (2) comporte du sulfure de zinc ou du séléniure de zinc et le domaine spectrale du filtre de longueur d'onde est compris entre 5,5 µm et 11,0 µm.

12. Spectromètre infrarouge ATR selon l'une des revendications 1 à 11, dans lequel la rangée de détecteurs de lumière infrarouge (10) comporte une pluralité de pixels capteurs de lumière infrarouge pyroélectriques.

13. Spectromètre infrarouge ATR selon la revendication 12, dans lequel les pixels capteurs de lumière infrarouge pyroélectriques comportent une couche mince en zirconate-titanate de plomb pour détecter la lumière infrarouge.

14. Spectromètre infrarouge ATR selon la revendication 13, dans lequel la couche mince est plus mince que la longueur d'onde de la lumière infrarouge à détecter.
